(19) **Europäisches Patentamt / European Patent Office / Office européen des brevets**

(11) **EP 4 624 058 A1**

(12) # EUROPEAN PATENT APPLICATION
published in accordance with Art. 153(4) EPC

(43) Date of publication:
**01.10.2025 Bulletin 2025/40**

(21) Application number: **23893745.2**

(22) Date of filing: **17.11.2023**

(51) International Patent Classification (IPC):
**B05D 3/02** (2006.01)

(52) Cooperative Patent Classification (CPC):
**H05B 3/24; B05D 3/02; H05B 3/145;**
**H05B 2203/032; Y02E 60/10**

(86) International application number:
**PCT/CN2023/132317**

(87) International publication number:
**WO 2024/109655 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022  CN 202223163339 U**

(71) Applicant: **BYD Company Limited**
**Shenzhen, Guangdong 518118 (CN)**

(72) Inventors:
 • **LU, Longfei**
   **Shenzhen, Guangdong 518118 (CN)**
 • **LIU, Ke**
   **Shenzhen, Guangdong 518118 (CN)**
 • **GU, Chengyan**
   **Shenzhen, Guangdong 518118 (CN)**
 • **ZENG, Guobo**
   **Shenzhen, Guangdong 518118 (CN)**
 • **WANG, Yonghua**
   **Shenzhen, Guangdong 518118 (CN)**

(74) Representative: **Mathys & Squire**
**The Shard**
**32 London Bridge Street**
**London SE1 9SG (GB)**

(54) **INFRARED HEATING PANEL, INFRARED BAKING DEVICE, AND INFRARED BAKING SYSTEM**

(57)    An infrared baking system, comprising an infrared baking device (1000) comprising infrared heating panels (100). The infrared baking device (1000) comprises the infrared heating panels (100). Each infrared heating panel (100) comprises a base layer (10) and an infrared radiation layer (20). The infrared radiation layer (20) is arranged on the surface of the base layer (10). The infrared radiation layer (20) comprises a main region (24) and edge regions (25) connected to two opposite sides of the main region (24). The thickness of each edge region (25) is greater than that of the main region (24).

FIG. 5

EP 4 624 058 A1

**Description**

## CROSS-REFERENCE TO RELATED APPLICATIONS

The present disclosure claims priority to Chinese Patent Application No. 202223163339.2, filed on November 25, 2022 and entitled "INFRARED HEATING PANEL, INFRARED BAKING DEVICE, AND INFRARED BAKING SYSTEM". The entire content of the above-referenced application is incorporated herein by reference.

## FIELD

The present disclosure relates to the field of infrared baking technologies, and more specifically, to an infrared heating panel, an infrared baking device, and an infrared baking system.

## BACKGROUND

In the related arts of lithium battery manufacturing processes, an electrode plate coating is baked in a coater oven by means of an infrared heating technology. However, when the infrared panels are installed on a coating oven, blank regions inevitably occur in the electrode plate coating corresponding to the infrared panels. Radiation energy from the infrared panels in the blank regions is uneven, resulting in poor uniformity in heating the electrode plate coating.

## SUMMARY

The present disclosure is to provide an infrared heating panel, an infrared baking device, and an infrared baking system, so as to resolve a problem of uneven baking in a seam region after existing infrared heating panels are spliced.

To resolve the foregoing problem, according to a first aspect, the present disclosure provides an infrared heating panel, which includes a base layer and an infrared radiation layer. The base layer includes an inner surface. The infrared radiation layer is arranged on the inner surface of the base layer and covers the inner surface of the base layer.

The infrared radiation layer includes a main region and edge regions connected to two opposite sides of the main region. A thickness of the edge region is greater than a thickness of the main region.

In this embodiment, because the thickness of the edge region is greater than the thickness of the main region, a cross-sectional area of the edge region is greater than that of the main region for a same length. A greater thermal radiation power is generated in the edge region after being powered, so as to avoid the problem that no infrared radiation is present in an edge region corresponding to an electrode plate or the edge region is insufficiently baked, thereby improving heating uniformity of an electrode plate coating.

In an embodiment, a thickness of the edge region gradually increases in a direction of the main region facing the edge region.

The design in which the edge region is gradually increased can significantly reduce impact on another region while effectively eliminating heat radiation blind regions of the seam region. An increase of the thickness between the edge regions can cause transition between the edge region and the main region to be more uniform, so that the heating of the infrared radiation layer is more uniform. As a result, the electrode plate coating on a current collector can be uniformly heated, and consistency of product quality is greatly improved.

In an embodiment, a maximum difference between the thickness of the edge region and the thickness of the main region is less than or equal to 5 $\mu$m. The main region has a uniform thickness. The thickness of the main region is greater than or equal to 5 $\mu$m and less than or equal to 20 $\mu$m. In addition, in a thickness direction of the infrared heating panel, each edge region includes an outer surface facing away from the base layer. The main region includes an outer surface facing away from the base layer. The infrared radiation layer includes an inner surface facing the base layer and an outer surface facing away from the base layer. The inner surface of the infrared radiation layer is arranged opposite to the outer surface of the infrared radiation layer. The outer surface of two edge regions and the outer surface of the main region are connected and flush with each other, and form the outer surface of the infrared radiation layer facing away from the base layer.

By controlling the range and the relationship between the thicknesses of the edge region and the main region, the magnitude of a resistance may be controlled, so as to determine power distribution, thereby implementing a power division design and improving heat radiation uniformity.

In an embodiment, in a thickness direction of the infrared heating panel, a thickness of the base layer corresponding to the edge region gradually decreases in the direction of the main region facing the edge region. Therefore, a support area of the base layer for the infrared radiation layer is increased, and reliability and stability of the connection between the infrared radiation layer and the base layer is improved.

In an embodiment, in a thickness direction of the infrared heating panel, a sum of the thickness of the base layer and a thickness of the infrared radiation layer remains unchanged in the direction of the main region facing the edge region, so that an entire structure of the infrared heating panel is more compact.

In an embodiment, the infrared radiation layer is made of graphene and the base layer is made of glass ceramics; or the infrared radiation layer is made of graphene or the base layer is made of glass ceramics; at least one of the infrared radiation layer is made of graphene or the base layer is made of glass ceramics. After being powered, the graphene can radiate a large quantity of far infrared rays with a wavelength ranging from 8 micrometers to 14 micrometers. After a receiver receives the far infrared rays, the energy is extracted and converted into thermal energy, so that a temperature of the receiver increases. The glass ceramics have advantages such as high infrared reflectivity, stable physical and chemical properties, large mechanical strength, and a small coefficient of thermal expansion. In a case of a rapid change in temperature, changes to the physical and chemical properties and a physical volume are small, which can maintain a stable high infrared reflectivity, and does not rapidly expand and contract to cause exfoliation of the infrared radiation layer on the surface.

According to a second aspect, the present disclosure further provides an infrared baking device. The infrared baking device includes a cavity. A plurality of infrared heating panels are arranged in the cavity. The base layer of the plurality of infrared heating panels is arranged on the cavity.

In this embodiment, the infrared baking device is configured to bake the electrode plate coating on a current collector to form an electrode plate substrate. The thickness of the edge region of the infrared heating panel used by the infrared baking device is greater than the thickness of the main region. A larger thermal radiation power is generated in the edge region after being powered, to avoid that no infrared radiation is present in the edge region corresponding to the electrode plate coating or the edge region is insufficiently baked as a result of an insufficient temperature, thereby ensuring quality of the electrode plate substrate.

In an embodiment, the plurality of infrared heating panels are arranged side by side and spaced apart along a length direction of the infrared baking device.

In an embodiment, a part of the infrared heating panels forms a first infrared heating assembly in the cavity. Another part of the infrared heating panels forms a second infrared heating assembly in the cavity. The first infrared heating assembly and the second infrared heating assembly are spaced apart in a thickness direction of the infrared heating panel.

In an embodiment, a projection of the infrared heating panel of the first infrared heating assembly in the thickness direction of the infrared heating panel is spaced apart from a projection of the infrared heating panel of the second infrared heating assembly in the thickness direction of the infrared heating panel.

In an embodiment, the infrared baking device further includes a plurality of air nozzles. The plurality of air nozzles are arranged in the cavity. The plurality of infrared heating panels and the plurality of air nozzles are alternately spaced apart.

In an embodiment, the infrared baking device further includes a plurality of air ducts. The plurality of air ducts are in communication with the plurality of air nozzles and arranged around the infrared baking device.

According to a third aspect, the present disclosure further provides infrared baking system. The infrared baking system includes the infrared baking device and a current collector. The current collector is provided with an electrode plate coating. The current collector extends through the cavity. In a thickness direction of the infrared heating panel, a bottom surface of the infrared heating panel is spaced apart from and opposite to the electrode plate coating. The thickness of the edge region of the infrared heating panel used by the infrared baking device is greater than the thickness of the main region. A larger thermal radiation power is generated in the edge region after being powered, to avoid that no infrared radiation is present in the edge region corresponding to the electrode plate coating or the edge region is insufficiently baked as a result of an insufficient temperature, thereby improving performance of the infrared baking system, and ensuring quality of the electrode plate substrate.

In an embodiment, a seam region is formed between every two adjacent infrared heating panels. A width of the seam region is greater than or equal to 10 mm and less than or equal to 25 mm. The edge region located at the edge of the infrared heating panel and close to the seam region can generate a greater thermal radiation power, to fill the seam region, thereby avoiding affecting a baking process of an electrode plate opposite to the seam region as a result of no infrared radiation of the seam region. At this size, when the infrared heating panel heats the electrode plate coating, impacts on other regions can be significantly reduced while effectively eliminating thermal radiation blind regions in the seam region, thereby ensuring uniform heat on the electrode plate coating.

In an embodiment, a length of the edge region is less than or equal to a straight-line distance between the electrode plate coating and the bottom surface of the infrared heating panel. By limiting the length of the edge region, impacts on the main region can be significantly reduced while effectively eliminating thermal radiation blind regions in the seam region.

In an embodiment, a straight-line distance between the bottom surface of the infrared heating panel and the electrode plate coating is greater than or equal to 15 mm and less than or equal to 25 mm, so as to ensure that after being powered, the thermal radiation power of the edge region is greater than the thermal radiation power of the main region.

In an embodiment, the plurality of infrared heating panels are located on at least one side of the current collector in the thickness direction of the infrared heating panel.

In an embodiment, the infrared baking system further includes a conveying device. The conveying device is configured to carry and transport the electrode plate coating.

According to the infrared baking device provided in the present disclosure, an infrared heating panel of a single model and a single size may be spliced and mounted, which achieves advantages of simple arranging, easy control, and high-efficient maintenance, thereby ensuring heating uniformity of the infrared heating panel.

## BRIEF DESCRIPTION OF THE DRAWINGS

To describe technical solutions in embodiments of the present disclosure or the related art more clearly, drawings that need to be used in the embodiments of the present disclosure are briefly described below. Apparently, the drawings in the following description show only some embodiments of the present disclosure, and a person of ordinary skill in the art can derive other drawings from the drawings without creative efforts.

FIG. 1 is a three-dimensional schematic structural diagram of an infrared heating panel according to the present disclosure from a first perspective;

FIG. 2 is an exploded view of the infrared heating panel shown in FIG. 1;

FIG. 3 is a three-dimensional schematic structural diagram of the infrared heating panel shown in FIG. 1 from a second perspective;

FIG. 4 is a schematic diagram of a baking process of the infrared heating panel shown in FIG. 3 in an infrared baking device; and

FIG. 5 is a front view of the infrared heating panel shown in FIG. 3 in operation.

## DETAILED DESCRIPTION

The technical solutions in embodiments of the present disclosure are clearly and completely described in the following with reference to the drawings in the embodiments of the present disclosure. It will be appreciated that, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

In the related art, an infrared heating panel is used in a coating machine oven to bake an electrode plate of a battery. The infrared heating panel is usually spliced transversely or longitudinally in a coating oven. A splicing gap exists between the infrared heating panels mounted in a splicing form. During baking, an electrode plate region opposite to the splicing gap is prone to a phenomenon of uneven baking, causing the electrode plate coating to stick to a roller and poor heating uniformity, and affecting quality of an electrode plate. In the embodiments of the present disclosure, an infrared heating panel is provided, which can effectively bake a region opposite to the splicing gap of the electrode plate, to ensure quality of the electrode plate.

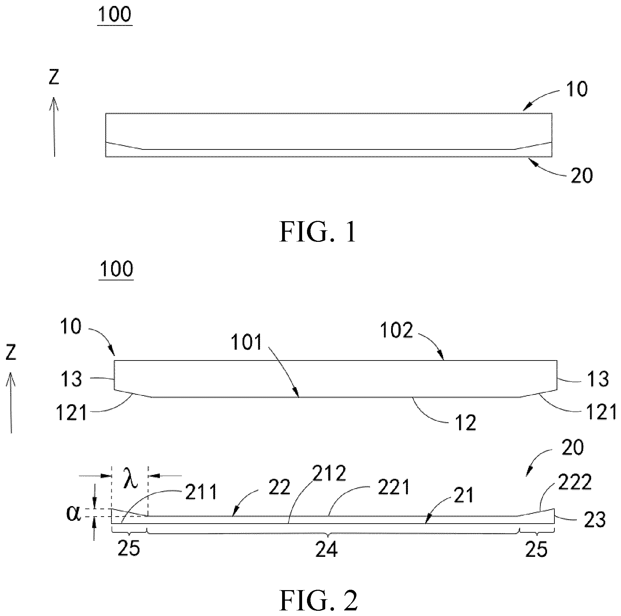

Referring to FIG. 1 and FIG. 2 together, FIG. 1 is a three-dimensional schematic structural diagram of an infrared heating panel 100 according to the present disclosure from a first perspective. FIG. 2 is an exploded view of the infrared heating panel 100 shown in FIG. 1.

The infrared heating panel 100 in this embodiment includes a base layer 10 and an infrared radiation layer 20. The infrared radiation layer 20 is formed on a surface of the base layer 10. A thickness of the infrared radiation layer 20 located in an edge region 25 is greater than a thickness of another region. The infrared radiation layer 20 includes an outer surface and an inner surface arranged away from the outer surface. the inner surface faces the base layer 10. The outer surface faces away from the base layer 10. The infrared radiation layer 20 includes a main region 24 and edge regions 25 connected to two opposite sides of the main region 24. In addition, in a thickness direction of the infrared heating panel 100, a thickness of the edge region 25 is greater than a thickness of the main region 24.

In a same length, a cross-sectional area of the edge region 25 is greater than that of the main region 24. The edge region 25 generates a greater thermal radiation power after being energized, so as to avoid the problem of no infrared radiation being present in the edge region 25 corresponding to the electrode plate or the edge region being insufficiently baked, thereby improving even heating of electrode plate coating.

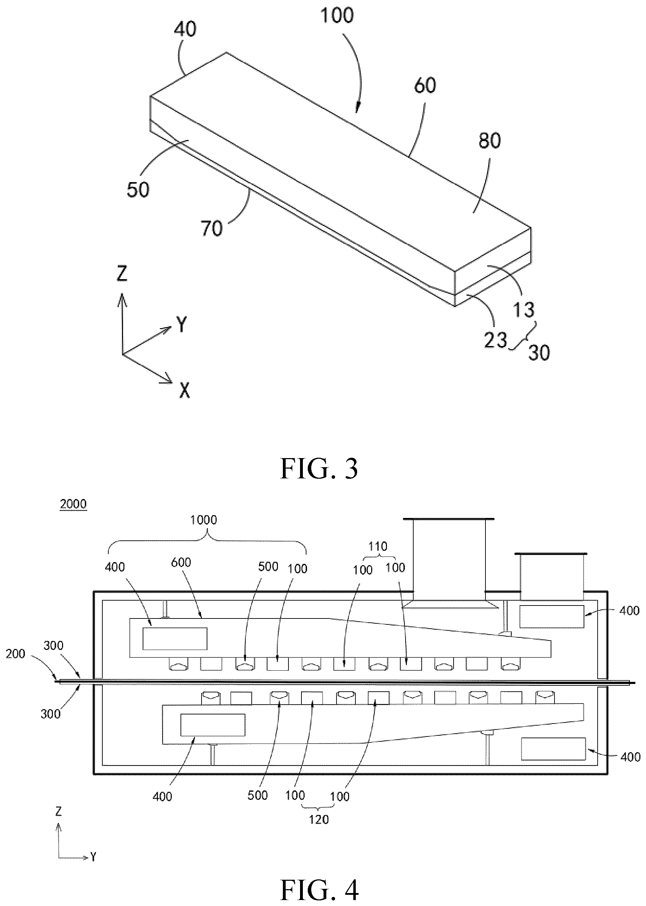

Referring to FIG. 3 and FIG. 4 together, FIG. 3 is a three-dimensional schematic structural diagram of the infrared heating panel 100 shown in FIG. 1 from a second perspective. FIG. 4 is a schematic diagram of a baking process of the infrared heating panel 100 shown in FIG. 3 in an infrared baking device 1000. For ease of description, a length direction of the infrared heating panel 100 is defined as an X-axis direction, a width direction of the infrared heating panel 100 is defined as a Y-axis direction, and a thickness direction of the infrared heating panel 100 is defined as a Z-axis direction. The infrared heating panel 100 and the infrared baking device 1000 in the present disclosure are described in detail below with reference to specific embodiments.

Referring to FIG. 1 and FIG. 2 again, in an embodiment of the present disclosure, a thickness of the edge region

25 gradually increases in a direction of the main region 24 facing the edge region 25. A gradually increasing thickness of the edge region 25 can achieve a more uniform transition between the edge region 25 and the main region 24, so that the heating of the infrared radiation layer is more uniform. Specifically, the base layer 10 has a substantially rectangular plate-like structure. The base layer 10 includes a first connecting surface 12 and two first side surfaces 13 oppositely arranged. The two first side surfaces 13 are connected to the first connecting surface 12. In this embodiment, a connecting edge between the first connecting surface 12 and each first side surface 13 forms the first inclined surface 121. The first inclined surface 121 is inclined outward toward the base layer 10. Specifically, in this embodiment, the base layer 10 includes an inner surface 101 and an outer surface 102 arranged opposite to the inner surface. The inner surface 101 of the base layer 10 faces the infrared radiation layer 20. The outer surface 102 of the base layer 10 faces away from the infrared radiation layer 20. The first connecting surface 12 is connected to the first inclined surface 121 and forms the inner surface 101 of the base layer 10. The infrared radiation layer 20 is formed on the first connecting surface 12 and the first inclined surface 121 and covers the first connecting surface 12 and the first inclined surface 121. In other words, the infrared radiation layer 20 is formed on the inner surface 101 of the base layer 10. In this embodiment, the base layer 10 is configured to carry the infrared radiation layer 20. In another implementation, the base layer 10 may further be configured to reflect an infrared radiated by the infrared radiation layer 20. The base layer 10 may be made of a material having relatively high infrared reflectivity, or may be formed by applying an infrared reflective coating to a surface of a carrier material. In this embodiment provided in the present disclosure, the base layer 10 is glass ceramics. In the thickness direction Z of the infrared heating panel 100, the thickness of the base layer 10 is greater than or equal to 5 mm and less than or equal to 10 mm. The glass ceramics have advantages such as high infrared reflectivity, stable physical and chemical properties, large mechanical strength, and a small coefficient of thermal expansion. In a case of a rapid change in the temperature, changes of the physical and chemical properties and a physical volume are small, which can maintain stable high infrared reflectivity, and does not rapidly expand and contract to cause exfoliation of the infrared radiation layer 20 on the surface.

In this embodiment of the present disclosure, the infrared radiation layer 20 is formed on the first connecting surface 12 and the first inclined surface 121 of the base layer 10, covers the entire first connecting surface 12 and the first inclined surface 121, and can radiate a large number of infrared rays to the outside under external field excitation. Specifically, the infrared radiation layer 20 is made of graphene, and may be understood as a graphene layer stacked on the surface of the base layer 10.

After being energised, the graphene can radiate a large quantity of far infrared rays with a wavelength ranging from 8 micrometers to 14 micrometers. After a receiver receives the far infrared rays, the energy is extracted and converted into thermal energy, so that a temperature of the receiver increases. Specifically, under an effect of an electric field, a carbon group in the graphene generates a "Brownian motion", severe friction and collision occur between the carbons, generated thermal energy is transmitted to the outside in the form of far-infrared radiation, and electric energy input is effectively converted into far-infrared radiant thermal energy. In some embodiments, when the infrared radiation layer 20 is prepared, the graphene may be made into a thin film and adhered to the base layer 10, or a graphene paste or paint may be printed or screen printed to form a graphene heat generating coating on the base layer 10.

In this embodiment, the infrared radiation layer 20 includes an outer surface 21, an inner surface 22 arranged opposite to the outer surface 21, and two second side surfaces 23 arranged opposite to each other. The inner surface of the infrared radiation layer 20 includes a second connecting surface 221 and a second inclined surface 222 connected to the second connecting surface 221. A connecting edge between the second connecting surface 221 and each second side surface 23 forms the second inclined surface 222. The second inclined surface 222 is inclined outward toward the base layer 10. The second side surface 23 connects the outer surface 21 and the inner surface 22. When the infrared radiation layer 20 is stacked on the base layer 10, the second connecting surface 22 is opposite to and attached to the first connecting surface 12. The first side surface 13 and the second side surface 23 are connected and coplanar. In this embodiment, the first side surface 13 is flush with the second side surface 23.

The infrared radiation layer 20 further includes a main region 24 and edge regions 25 located on two opposite sides of the main region 24. The outer surface 21 is jointly formed by surfaces of the main region 24 and the edge regions 25. The two second side surfaces 23 are side surfaces of the edge regions 25. In this embodiment, the main region 24 has a uniform thickness. The thickness of the main region 24 is greater than or equal to 5 μm and less than or equal to 20 μm. A thickness of the edge region 25 gradually increases in a direction of the main region 24 facing the edge region 25.

It may be understood that the edge regions 25 are located at two opposite sides of the infrared radiation layer 20 along the length direction (the X-axis direction). In other words, the edge region 25 is located at a connecting position where the two second side surfaces 23 are connected to the outer surface 21. A dimension of the edge region 25 in the thickness direction of the infrared heating panel 100 is greater than a dimension of the main region 24 in the thickness direction of the infrared heating panel 100. In fact, the edge region 25 corresponds to a position where the first inclined surface 121 is located. During formation of the infrared radiation layer 20, since the first inclined surface 121 is formed in a thickness direction of the first connecting surface 12, a missing portion of the base layer 10 provides a space for the thickness of the edge region 25 of the infrared radiation layer 20. It should be noted that each edge region 25 includes an outer surface 211 facing away from the base layer 10. The main region 24 includes an outer surface 212 facing away from the base layer 10.

The outer surface 211 of the two edge regions 25 and the outer surface 212 located in the main region 24 are connected and flush with each other, and form the outer surface 21 of the infrared radiation layer 20. The outer surface 21 of the infrared radiation layer 20 is a plane. In other words, in the thickness direction of the infrared radiation layer 20, the outer surface 21 of two edge regions 25 is connected and flush with the outer surface 21 located in the main region 24.

In this embodiment, two opposite sides of the base layer 10 along the length direction (the X-axis direction) are chamfered, and then an infrared radiation material is formed on the base layer 10 through a screen-printing process, thereby forming the infrared radiation layer 20 having the edge region 25. It may be understood that the edge region 25 is in a shape of a reverse chamfer.

A length (a dimension along the X-axis direction) of the edge region 25 is $\lambda$. A maximum difference (a dimension in the Z-axis direction) between the thickness of the edge region 25 and the thickness of the main region 24 of the infrared radiation layer 20 is $\alpha$. $\alpha$ should be less than or equal to 5 $\mu$m. The thickness of the edge region 25 gradually decreases from an edge to a center along the length direction (the X-axis direction), until the thickness is the same as the thickness of the main region 24. A small increase in radiation energy avoids uneven baking of the coating and cracking of the electrode plate due to the increase in radiation energy directly below the infrared panel. In this embodiment, along the length $\lambda$, the thickness of the edge region 25 gradually increases from an interior to an edge of the infrared radiation layer 20. In the same length, the cross-sectional area of the edge region 25 also increases, causing an increase in the thermal radiation power of the edge region 25.

In another embodiment, along a direction from the main region 24 to the edge region 25, it will be understood that the thickness of the edge region 25 is uniform in the length direction or the width direction of the infrared heating panel 100. A cross section of the edge region 25 may be a rectangle, and the thickness of the edge region 25 is greater than the thickness of the main region 24. Specifically, a length (a dimension along the X-axis direction) of the edge region 25 is $\lambda$. The maximum difference (the dimension in the Z-axis direction) between the thickness of the edge region 25 and the thickness of the main region 24 of the infrared radiation layer 20 is $\alpha$. $\alpha$ should be less than or equal to 5 $\mu$m. When the cross section of the edge region 25 is a rectangle, the thickness of the edge region 25 remains unchanged along the length direction (the X-axis direction). It will be understood that the thickness of the edge region 25 is greater than the thickness of the main region. A cross-section shape of the edge region 25 is not specifically limited. A variation trend and a variation range of the thickness of the edge region 25 are not specifically limited.

Referring to FIG. 2 and FIG. 3, the infrared heating panel 100 includes a first side surface 30, a third side surface 50, a second side surface 40, a fourth side surface 60, a bottom surface 70, and a top surface 80. The outer surface 21 of the infrared radiation layer 20 is the bottom surface 70 of the infrared heating panel 100. The outer surface 102 of the base layer 10 is the top surface 80 of the infrared heating panel 100. The two first side surfaces 13 of the base layer 10 and the two second side surfaces 23 of the infrared radiation layer 20 are respectively aligned, and form the first side surface 30 and the second side surface 40 of the infrared heating panel 100. The first side surface 30 and the second side surface 40 connect the bottom surface 70 and the top surface 80. The infrared heating panel 100 further includes the third side surface 50 and the fourth side surface 60 arranged opposite to the third side surface. The first side surface 30, the third side surface 50, the second side surface 40, and the fourth side surface 60 are sequentially connected and enclosed to form a peripheral surface of the infrared heating panel 100. The edge region 25 is located at a joint of the first side surface 30 and the second side surface 40 and the bottom surface 70.

The infrared heating panel 100 is connected to a power supply on the third side surface 50 and the fourth side surface 60. A power supply electrode connected to the third side surface 50 should be electrically opposite to a power supply electrode connected to the fourth side surface 60. It should be noted that the two electrodes on the infrared heating panel 100 may be mounted to two ends parallel to the Y-axis direction, and are connected to an external power supply through connecting terminals. Positive and negative terminals of the power supply are conducted with the infrared radiation layer of the infrared heating panel 100. After a voltage is applied, a current in the width direction (the Y-axis direction) can be formed in the infrared radiation layer 20, so that the infrared radiation layer 20 converts the electric energy into thermal radiation energy for baking. In addition, the power supply of the infrared heating panel 100 may also be arranged on another side surface or a same side surface, for example, both arranged on the first side surface 30 and the second side surface 40, or may be independently arranged on a side surface opposite to the bottom surface 70. A specific position at which the power supply is arranged is not limited.

Referring to FIG. 4, the infrared heating panel 100 and the current collector 200 on which the electrode plate coating 300 is formed constitute an infrared baking system 2000.

The infrared baking system 2000 includes an infrared baking device 1000 and a current collector 200. An electrode plate coating 300 is arranged on the current collector 200. The infrared baking device 1000 includes a cavity 600, a plurality of infrared heating panels 100, a plurality of air ducts 400, and a plurality of air nozzles 500. The plurality of air ducts 400 are distributed around the infrared baking device 1000 and in communication with the cavity 600, and are configured to pump and spray hot air to the current collector 200 through the air nozzle 500.

The electrode plate coating 300 is coated on a surface of the current collector 200. The infrared baking device 1000 is configured to bake the electrode plate coating 300 on the current collector 200. The plurality of infrared heating panels 100 and the plurality of air nozzles 500 are arranged in the cavity 600, and are evenly alternately distributed on two sides of the current collector 200 in the Z-axis direction. The infrared heating panel 100 is staggered with and opposite to the air nozzle 500. The surfaces of the infrared heating panel 100 and the air nozzle 500 facing the current collector 200 are flush with each other. According to the system, upper and lower air nozzles 500 and the air duct 400 are arranged, so that the electrode plate coating 300 is suspended inside the infrared baking device 1000, thereby implementing baking on two sides and transmission.

Specifically, the plurality of infrared heating panels 100 are spaced apart side by side in the X-axis direction, are fixed to a fixture by splicing, and are mounted to gaps of the plurality of air nozzles 500 in a plurality of columns in the Y-axis direction. It may be understood that the plurality of infrared heating panels 100 and the plurality of air nozzles 500 are alternately spaced apart in the Y-axis direction. In the Z-axis direction, the infrared heating panel 100 on one side of the current collector 200 is arranged opposite to the air nozzle 500 on another side. The air nozzle 500 on one side of the current collector 200 is arranged opposite to the infrared heating panel 100 on another side. The infrared radiation layers 20 of the infrared heating panel 100 are placed facing the current collector 200.

Exemplarily, in this embodiment, a part of the plurality of infrared heating panels 100 forms a first infrared heating assembly 110 in the cavity 600. Another part of the infrared heating panels 100 forms a second infrared heating assembly 120 in the cavity 600. The first infrared heating assembly 110 and the second infrared heating assembly 120 are spaced apart in the thickness direction Z of the infrared heating panel 100. The current collector 200 is arranged between the first infrared heating assembly 110 and the second infrared heating assembly 120. The electrode plate coating 300 arranged on the current collector 200 is spaced apart from the first infrared heating assembly 110 and the second infrared heating assembly 120, to avoid a problem that the current collector 200 interferes in a transmission process, enhance a baking effect of the infrared baking device 1000 on the electrode plate coating 300, and ensure quality of the electrode plate. In some embodiments, the infrared baking device 1000 may be provided with only the first infrared heating assembly 110 or the second infrared heating assembly 120, thereby reducing production costs.

Optionally, in this embodiment, as shown in FIG. 4, the plurality of infrared heating panels 100 forms the first infrared heating assembly 110 at a top of the cavity 600. The plurality of infrared heating panels 100 forms the second infrared heating assembly 120 at a bottom of the cavity 600. The first infrared heating assembly 110 and the second infrared heating assembly 120 are arranged at an interval in the thickness direction Z of the infrared heating panel 100. Further, it is ensured that the electrode plate coatings on upper and lower layers of the current collector are also arranged along the thickness direction Z, which improves safety and reliability, improves the baking effect of the infrared baking device 1000 on the electrode plate coating 300, thereby ensuring the quality of the electrode plate.

A projection of the infrared heating panel 100 of the first infrared heating assembly 110 in the thickness direction Z of the infrared heating panel 100 is spaced apart from a projection of the infrared heating panel 100 of the second infrared heating assembly 120 in the thickness direction Z of the infrared heating panel 100. In other words, the infrared heating panel 100 of the first infrared heating assembly 110 and the infrared heating panel 100 of the second infrared heating assembly 120 are staggered in the width direction Y of the infrared heating panel 100, thereby avoiding the problem that no infrared radiation is present in a local region of the electrode plate coating 300 arranged on the current collector 200 or the local region is insufficiently baked, and improving heating consistency and uniformity for the electrode plate coating 300. In addition, a region in which the infrared heating panel 100 covers the electrode plate coating 300 is enlarged to improve the baking effect of the infrared baking device 1000 on the electrode plate coating 300, thereby ensuring the quality of the electrode plate.

Quantities of the infrared heating panels 100, the air ducts 400, and the air nozzles 500 are determined based on a specific situation of the infrared baking device, which are not specifically limited herein.

In a baking process of the infrared heating panels 100, the electrode plate coating 300 on the current collector 200 is simultaneously dried by the thermal radiation from the two sides of the infrared heating panel 100 and by hot air from the air nozzle 500. In addition, the current collector 200 is further pulled by a conveying device to perform a translational movement in the Y-axis direction, so as to drive the electrode plate coating 300 to move.

In this embodiment, two infrared heating panels 100 are used as an example for description.

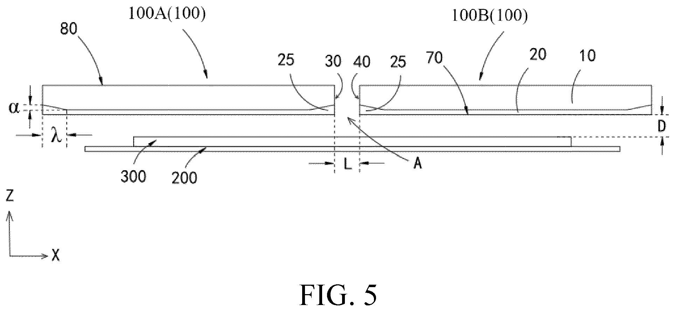

Reference is made to FIG. 5. FIG. 5 is a front view of the infrared heating panel 100 shown in FIG. 3 in operation. The two infrared heating panels 100 are respectively a first infrared heating panel 100A and a second infrared heating panel 100B. The first infrared heating panel 100A and the second infrared heating panel 100B are oppositely arranged side by side in a length direction (an X-axis direction). A first side surface 30 of the first infrared heating panel 100A and a second side surface 40 of the second infrared heating panel 100B are relatively arranged parallel to each other. A seam region A is provided therebetween. The first infrared heating panel 100A and the second infrared heating panel 100B are clamped inside the infrared baking device 1000 through a fixture.

The first infrared heating panel 100A and the second infrared heating panel 100B are arranged at an interval and opposite to the current collector 200 in a thickness direction (a Z-axis direction). A bottom surface 70 of the first infrared heating panel 100A and a bottom surface 70 of the second infrared heating panel 100B opposite to the current collector 200. It may be understood that the infrared radiation layer 20 of the first infrared heating panel 100A and the infrared radiation layer 20 of the second infrared heating panel 100B are both placed facing the current collector 200.

A width L of the seam region A between the first side surface 30 of the first infrared heating panel 100A and the second side surface 40 of the second infrared heating panel 100B is greater than or equal to 10 mm and less than or equal to 25 mm. Specifically, the width L of the seam region A refers to a straight-line distance between the first side surface 30 of the first infrared heating panel 100A and the second side surface 40 of the second infrared heating panel 100B in the X-axis direction.

A distance D between the electrode plate coating 300 and the infrared heating panel 100 should be greater than or equal to 15 mm and less than or equal to 25 mm. Specifically, the distance D between the electrode plate coating 300 and the infrared heating panel 100 is a straight-line distance between the bottom surface 70 of the infrared heating panel 100 and an outer surface of the electrode plate coating 300 facing away from the current collector 200. The straight-line distance refers to a shortest distance between the electrode plate coating 300 and the infrared heating panel 100. In this case, a length $\lambda$ of the edge region 25 should be less than the distance D between the electrode plate coating 300 and the infrared heating panel 100.

Formula (3) may be deduced from a power formula (1) and a resistance formula (2).

$$P = \frac{U^2}{R} \qquad (1)$$

$$R = \rho \frac{L}{S} \qquad (2)$$

$$P = \frac{U^2}{\rho \times L} \times S \qquad (3)$$

P in the power formula (1) represents a power, U represents a voltage, and R represents a resistance. $\rho$ in the resistance formula (2) represents a resistivity of a material, L is a length of the resistive material along a current direction, and S is a cross-sectional area of the resistive material perpendicular to the current direction. Since the current direction is along the Y-axis direction in this embodiment, FIG. 5 shows a cross section of the infrared heating panel 100 perpendicular to the current direction. It may be learned from Formula (3) that the power completely depends on factors such as the voltage, the resistivity of the material, the length of the resistive material along the current direction, and the cross-sectional area perpendicular to the current direction. Since the edge region 25 and the main region 24 are the same in terms of factors such as the voltage, the resistivity of the material, and the length of the resistive material along the current direction (the Y-axis direction), only a cross-sectional area S perpendicular to the current direction is different. Since the thickness (the dimension along the Z-axis direction) $\alpha$ of the edge region 25 is greater than a thickness of another part of the infrared radiation layer 20, an area of the edge region 25 is greater than an area (the area being a product of the length and the thickness) of the main region 24 in the same length. It may be understood from Formula (3) that the thermal radiation power of the edge region 25 after being energized is greater than a thermal radiation power of the main region 24. Therefore, the edge region 25 located at the edge of the infrared heating panel 100 and close to the seam region A can generate a greater thermal radiation power, to fill the seam region A, thereby avoiding affecting a baking process of an electrode plate opposite to the seam region A because of no infrared radiation of the seam region A.

In addition, since two side edges of the infrared heating panel 100 are each provided with the edge region 25, the seam region A can be simultaneously affected by two opposite side edge regions 25 of two adjacent infrared heating panels 100. For example, the seam region A in FIG. 3 is simultaneously affected by the edge region 25 of the first infrared heating panel 100A and the edge region 25 of the second infrared heating panel 100B. The edge region 25 of the first infrared heating panel 100A and the edge region 25 of the second infrared heating panel 100B are symmetrical about the seam region A. Energy obtained after superposition of infrared radiation of the two edge regions 25 is also symmetrically distributed, so that radiation energy distribution in the seam region A is more uniform, thereby ensuring uniformity of the heating of the electrode plate coating 300.

In this embodiment, the edge region 25 of the infrared radiation layer 20 along the length direction from an interior to an edge of the infrared radiation layer 20, the thickness of the edge region 25 gradually increases. In the same length, the cross-sectional area of the edge region 25 also increases, causing an increase in the thermal radiation power of the edge region 25. A smaller distance from the seam region A indicates a larger thermal radiation power of the edge region 25 and a stronger capability of filling a non-radiation blind region of the seam region A. A larger distance from the seam region A indicates a smaller thermal radiation power of the edge region 25, a smaller difference from a thermal radiation power of another region of the infrared radiation layer 20, and less power overflow to another region of the infrared radiation layer 20. Therefore, the design of edge chamfered thickening of the infrared radiation layer 20 can significantly reduce the impact on another region while effectively eliminating a heat radiation blind region of the seam region A, and ensure even distribution of the infrared radiant energy, so that the electrode plate coating 300 on the current collector 200 can be uniformly heated, and the consistency of product quality is greatly improved.

In another embodiment, three infrared heating panels 100 may also be arranged. The three infrared heating panels 100 are respectively a first infrared heating panel 100A, a second infrared heating panel 100B, and a third infrared heating panel. The third infrared heating panel should be arranged in parallel and opposite to the first infrared heating panel 100A and the second infrared heating panel 100B along the length direction (the X-axis direction), and is spliced in sequence and is clamped inside the infrared baking device 1000 through a same fixture. Exemplarily, the second side surface 40 of the third infrared heating panel and the first side surface 30 of the second infrared heating panel 100B are relatively arranged parallel to each other, A straight-line distance L between the first side surface 30 of the second infrared heating panel 100B and the second side surface 40 of the third infrared heating panel should be in a range of 10 mm to 25 mm, and is equal to a straight-line distance between the first side surface 30 of the first infrared heating panel 100A and the second side surface 40 of the second infrared heating panel 100B. A quantity of the infrared heating panels is not limited, and a rehearsal sequence of splicing and mounting may be deduced by analogy.

In addition, in another embodiment of the present disclosure, the infrared baking device 1000 is further provided with a conveying device. The conveying device is configured to carry and transport the electrode plate coating 300. The air nozzle 500 and the air duct 400 may be respectively arranged on two sides of the conveying device. The conveying device belongs to an infrared baking system 2000 using the infrared baking device 1000, rather than the infrared baking device 1000. The conveying device may be arranged inside the infrared baking device 1000, or may be arranged outside the infrared baking device 1000, or may be omitted. The current collector 200 is directly extended into the cavity to be positioned, and the current collector 200 is taken out after the baking.

According to the infrared heating panel 100 provided in the present disclosure, the resistance at the edge of the infrared radiation layer 20 is adjusted, so as to implement division control of the power, effectively eliminate the baking blind region of the electrode plate coating 300 corresponding to the seam region A, thereby avoiding cracking of the electrode plate coating 300 due to uneven heat and ensuring the quality of the electrode plate.

In addition, compared with an existing solution in which infrared heating panels 100 of different specifications are spliced to compensate the seam region A, the infrared heating panel 100 provided in the present disclosure may be spliced and mounted as a single model and a single size, thereby avoiding a complex process of dislocation-based mounting of the infrared heating panels 100 of different specifications, avoiding disturbance of an internal wind field of the infrared baking device 1000 caused after the infrared heating panels 100 of different specifications are dislocated, avoiding a difficulty that the infrared heating panels 100 of different specifications need to be uniformly allocated of different power during operation, avoiding a trouble of preparing the infrared heating panels 100 of different specifications during subsequent service or replacement of the infrared heating panels 100, and truly achieving simple arrangement, easy control, and high-efficient service.

The contents disclosed above are merely exemplary embodiments of the present disclosure, and certainly is not intended to limit the scope of the claims of the present disclosure. A person of ordinary skill in the art may understand all or part of the processes for implementing the foregoing embodiments, and an equivalent change made according to the claims of the present disclosure still falls within the scope covered by the present disclosure.

**Claims**

1.  An infrared heating panel (100), comprising:

    a base layer (10), the base layer (10) comprising an inner surface (101); and
    an infrared radiation layer (20), the infrared radiation layer (20) being arranged on the inner surface (101) of the base layer (10) and covering the inner surface (101) of the base layer (10),
    the infrared radiation layer (20) comprising a main region (24) and edge regions (25) connected to two opposite sides of the main region (24), and a thickness of the edge region (25) being greater than a thickness of the main region (24).

2.  The infrared heating panel (100) according to claim 1, wherein
    the thickness of the edge region (25) gradually increases in a direction of the main region (24) facing the edge region (25).

3. The infrared heating panel (100) according to claim 1 or 2, wherein
a maximum difference between the thickness of the edge region (25) and the thickness of the main region (24) is less than or equal to 5 $\mu$m.

4. The infrared heating panel (100) according to any of claims 1 to 3, wherein
the main region (24) has a uniform thickness; and the thickness of the main region (24) is greater than or equal to 5 $\mu$m and less than or equal to 20 $\mu$m.

5. The infrared heating panel (100) according to any of claims 1 to 4, wherein

in a thickness direction (Z) of the infrared heating panel (100), each edge region (25) comprises an outer surface (211) facing away from the base layer (10); the main region (24) comprises an outer surface (212) facing away from the base layer (10); the infrared radiation layer (20) comprises an inner surface (22) facing the base layer (10) and an outer surface (21) facing away from the base layer (10); the inner surface (22) of the infrared radiation layer (20) is arranged opposite to the outer surface (21) of the infrared radiation layer (20); and
the outer surface (211) of two edge regions (25) is connected and flush with the outer surface (212) of the main region (24), and form the outer surface (21) of the infrared radiation layer (20).

6. The infrared heating panel (100) according to any of claims 1 to 5, wherein in a thickness direction (Z) of the infrared heating panel (100), a thickness of the base layer (10) corresponding to the edge region (25) gradually decreases in the direction of the main region (24) facing the edge region (25).

7. The infrared heating panel (100) according to any of claims 1 to 6, wherein in a thickness direction (Z) of the infrared heating panel (100), a sum of the thickness of the base layer (10) and a thickness of the infrared radiation layer (20) remains unchanged in the direction of the main region (24) facing the edge region (25).

8. The infrared heating panel (100) according to any of claims 1 to 7, wherein
the infrared radiation layer (20) is made of graphene and the base layer (10) is made of glass ceramics; or the infrared radiation layer (20) is made of graphene or the base layer (10) is made of glass ceramics; at least one of the infrared radiation layer (20) is made of graphene or the base layer (10) is made of glass ceramics.

9. An infrared baking device (1000), the infrared baking device (1000) comprising a cavity (600) and a plurality of infrared heating panels (100) according to any of claims 1 to 8, the plurality of infrared heating panels (100) being arranged in the cavity (600),
the base layer (10) of the plurality of infrared heating panels (100) being arranged on the cavity (600).

10. The infrared baking device (1000) according to claim 9, wherein the plurality of infrared heating panels (100) are arranged side by side and spaced apart along a length direction (X) of the infrared heating panel (100).

11. The infrared baking device (1000) according to claim 9 or 10, wherein a part of the infrared heating panel (100) forms a first infrared heating assembly (110) in the cavity (600); another part of the infrared heating panel (100) forms a second infrared heating assembly (120) in the cavity (600); and the first infrared heating assembly (110) and the second infrared heating assembly (120) are spaced apart from each other in the thickness direction (Z) of the infrared heating panel (100).

12. The infrared baking device (1000) according to claim 11, wherein a projection of the infrared heating panel (100) of the first infrared heating assembly (110) in the thickness direction (Z) of the infrared heating panel (100) is spaced apart from a projection of the infrared heating panel (100) of the second infrared heating assembly (120) in the thickness direction (Z) of the infrared heating panel (100).

13. The infrared baking device (1000) according to any of claims 9 to 12, the infrared baking device (1000) further comprising a plurality of air nozzles (500), the plurality of air nozzles (500) being arranged in the cavity (600), and the plurality of infrared heating panels (100) and the plurality of air nozzles (500) being alternately spaced apart.

14. The infrared baking device (1000) according to claim 13, the infrared baking device (1000) further comprising a plurality of air ducts (400), the plurality of air ducts (400) being in communication with the plurality of air nozzles (500) and arranged around the infrared baking device (1000).

15. An infrared baking system (2000), comprising the infrared baking device (1000) according to any of claims 9 to 14 and a current collector (200), the current collector (200) being provided with an electrode plate coating (300), the current collector (200) extending through the cavity (600), and in a thickness direction (Z) of the infrared heating panel (100), a bottom surface (70) of the infrared heating panel (100) being spaced apart from and opposite to the electrode plate coating (300).

16. The infrared baking system (2000) according to claim 15, wherein
a seam region (A) is formed between every two adjacent infrared heating panels (100), a width of the seam region (A) being greater than or equal to 10 mm and less than or equal to 25 mm.

17. The infrared baking system (2000) according to claim 15 or 16, wherein
a length of the edge region (25) is less than or equal to a straight-line distance between the bottom surface (70) of the infrared heating panel (100) and the electrode plate coating (300).

18. The infrared baking system (2000) according to any of claims 15 to 17, wherein
a straight-line distance between the bottom surface (70) of the infrared heating panel (100) and the electrode plate coating (300) is greater than or equal to 15 mm and less than or equal to 25 mm.

19. The infrared baking system (2000) according to any of claims 15 to 18, wherein the plurality of infrared heating panels (100) are located on at least one side of the current collector (200) in the thickness direction (Z) of the infrared heating panel (100).

20. The infrared baking system (2000) according to any of claims 15 to 19, the infrared baking system (2000) further comprising a conveying device, the conveying device being configured to carry and transport the electrode plate coating (300).

100

Z

10

20

**FIG. 1**

100

Z

10

13

121

101

102

12

13

121

20

λ

α

211

22

212

221

21

222

23

25

24

25

**FIG. 2**

FIG. 3

FIG. 4

FIG. 5

## INTERNATIONAL SEARCH REPORT

| | International application No. |
|---|---|
| | **PCT/CN2023/132317** |

**A.    CLASSIFICATION OF SUBJECT MATTER**

B05D3/02(2006.01)i

According to International Patent Classification (IPC) or to both national classification and IPC

**B.    FIELDS SEARCHED**

Minimum documentation searched (classification system followed by classification symbols)

B05D

Documentation searched other than minimum documentation to the extent that such documents are included in the fields searched

Electronic data base consulted during the international search (name of data base and, where practicable, search terms used)

CNTXT, ENTXT, ENTXTC, DWPI, 中国期刊网全文数据库, CJFD: 板, 比亚迪股份有限公司, 边, 层, 电极, 辐射, 干燥, 功率, 顾成言, 横截面, 烘干, 烘烤, 红外, 红外辐射层, 厚度, 极片, 加热, 均匀, 刘克, 漏烤, 卢龙飞, 受热, 王永华, 曾国毫, 锂电池, 电极, Dry, drying, lithium, piece?, pole, thickness, Infrar+, heat+, infrare?, radiat+, bak+, electrode?, batter+, uniform, equal, even+, homogeneous, layer

**C.    DOCUMENTS CONSIDERED TO BE RELEVANT**

| Category* | Citation of document, with indication, where appropriate, of the relevant passages | Relevant to claim No. |
|---|---|---|
| PX | CN 218982188 U (BYD CO., LTD.) 09 May 2023 (2023-05-09)<br>description, paragraphs 4-18 | 1-20 |
| A | US 2020015323 A1 (SUZHOU HANNA MATERIALS TECHNOLOGY LTD.) 09 January 2020 (2020-01-09)<br>description, paragraphs 7-12 | 1-20 |
| A | CN 102230841 A (CHANGCHUN UNIVERSITY OF SCIENCE AND TECHNOLOGY) 02 November 2011 (2011-11-02)<br>entire document | 1-20 |
| A | CN 106252605 A (SHENZHEN XINYUREN TECHNOLOGY CO., LTD.) 21 December 2016 (2016-12-21)<br>entire document | 1-20 |
| A | CN 108458579 A (ANHUI WEISHIYANG INFORMATION TECHNOLOGY CO., LTD.) 28 August 2018 (2018-08-28)<br>entire document | 1-20 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **24 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/132317**

## C. DOCUMENTS CONSIDERED TO BE RELEVANT

| Category* | Citation of document, with indication, where appropriate, of the relevant passages | Relevant to claim No. |
|---|---|---|
| A | CN 108645175 A (BEIJING LVNENG JIAYE NEW ENERGY CO., LTD.) 12 October 2018 (2018-10-12) entire document | 1-20 |
| A | CN 109682189 A (BEIJING WELION NEW ENERGY TECHNOLOGY CO., LTD.) 26 April 2019 (2019-04-26) entire document | 1-20 |
| A | JP 2014107237 A (MEIKO ELECTRONICS CO., LTD.) 09 June 2014 (2014-06-09) entire document | 1-20 |
| A | WO 2021026979 A1 (SHENZHEN WEITE XINDA TECHNOLOGY CO., LTD.) 18 February 2021 (2021-02-18) entire document | 1-20 |

Form PCT/ISA/210 (second sheet) (July 2022)

## INTERNATIONAL SEARCH REPORT
### Information on patent family members

International application No.

**PCT/CN2023/132317**

| Patent document cited in search report | | | Publication date (day/month/year) | Patent family member(s) | | | Publication date (day/month/year) |
|---|---|---|---|---|---|---|---|
| CN | 218982188 | U | 09 May 2023 | None | | | |
| US | 2020015323 | A1 | 09 January 2020 | US | 11438971 | B2 | 06 September 2022 |
| | | | | WO | 2018166137 | A1 | 20 September 2018 |
| | | | | CN | 206908878 | U | 19 January 2018 |
| CN | 102230841 | A | 02 November 2011 | None | | | |
| CN | 106252605 | A | 21 December 2016 | CN | 106252605 | B | 25 June 2019 |
| CN | 108458579 | A | 28 August 2018 | None | | | |
| CN | 108645175 | A | 12 October 2018 | CN | 208187060 | U | 04 December 2018 |
| CN | 109682189 | A | 26 April 2019 | None | | | |
| JP | 2014107237 | A | 09 June 2014 | JP | 5984643 | B2 | 06 September 2016 |
| WO | 2021026979 | A1 | 18 February 2021 | CN | 110350270 | A | 18 October 2019 |
| | | | | CN | 210430029 | U | 28 April 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202223163339